# FASCICULE DE BREVET EUROPEEN

(11) **EP 0 621 525 B1**
(45) Date de publication et mention de la délivrance du brevet: **03.11.1999**
(21) Numéro de dépôt: 94400653.5
(22) Date de dépôt: 28.03.1994
(51) Int. Cl.: G06F 1/14

(54) **Microprocesseur sans temporisateur pour la fourniture de signaux de base de temps**
Mikroprozessor ohne Taktgeber für die Lieferung von Zeitbasissignalen
Microprocessor without timer for providing time base signals

(30) Priorité: 30.03.1993 FR 9303661
(43) Date de publication de la demande: 26.10.1994
(73) Titulaire: SOCIETE D'APPLICATIONS GENERALES D'ELECTRICITE ET DE MECANIQUE SAGEM, 75783 Paris Cédex 16 (FR)
(72) Inventeur: Delaporte, Francis, F-95520 Osny (FR)
(74) Mandataire: Bloch, Gérard

(56) Documents cités:
- BEHAVIOUR RESEARCH METHODS AND INSTRUMENTATION, vol. 11, no. 6 , Décembre 1979 , US, page 592 THOMAS BIDDLE PERERA: 'A comparison of BASIC language timing loops for the TRS-80 microcomputer'
- FUNKSCHAU, vol. 51, no. 8 , 31 Août 1979 , MÜNCHEN, DE, pages 1076 - 1077 MICHAEL KLEIN: 'Software-Uhr für den Z-80-KIT'
- IBM TECHNICAL DISCLOSURE BULLETIN, vol. 28, no. 7 , Décembre 1985 , NEW YORK, US, pages 3231 - 3232 'Processor-Independent Timing using a Software Timing Loop'

## Description

Un microprocesseur sans temporisateur mais, naturellement, avec horloge, intégrée ou non, pouvait être conduit, au cours du déroulement de ses programmes, à effectuer des calculs de temps, par comptage d'impulsions d'horloge. Mais il ne pouvait, a priori, s'agir que de calculs discrets de courtes durées, sans rapport avec une base de temps. Sinon, son unité centrale aurait été par trop affectée à ces tâches de calcul, au détriment des autres tâches.

Or, il est souvent utile de disposer de signaux de base de temps pour fournir l'heure ou une durée à un programme, ou encore pour commander l'afficheur d'une montre.

Pour résoudre ce problème, il a été ajouté, dans les microprocesseurs, plusieurs temporisateurs autonomes.

Ces temporisateurs déroulent leurs cycles de comptage de façon continue avec, toutefois, à la fin de chaque cycle, une mémorisation provisoire d'un signal de base de temps qui est envoyé à l'unité centrale du microprocesseur lorsqu'elle est disponible, en vue de sa transmission pour l'application prévue. Si l'unité centrale n'est pas immédiatement disponible pour recevoir le signal de base de temps, cela n'a aucun effet sur le passage au cycle de comptage suivant.

Ainsi, dans une voiture, pour considérer l'exemple qui est à l'origine du problème que s'est posé la demanderesse, sans pour autant qu'il faille le considérer comme limitatif de l'invention présentée ci-après, pour résoudre ce problème, un microprocesseur, comportant plusieurs temporisateurs recevant un signal d'horloge à fréquence précise et stable, pour commander notamment une montre du tableau de bord, exécute diverses autres tâches, comme, par exemple, la surveillance du niveau d'huile, sans affecter la fonction des temporisateurs qui continuent d'émettre périodiquement, à travers l'unité centrale, leurs signaux, comme les signaux de commande de micro-moteurs d'entraînement des aiguilles de la montre.

Une telle architecture de microprocesseur avec temporisateurs présente cependant l'inconvénient du coût, de l'encombrement et de la consommation énergétique de ces temporisateurs.

La présente invention vise donc à s'affranchir de ces temporisateurs, tout en préservant la fonction de base de temps des microprocesseurs.

A cet effet, la présente invention concerne un microprocesseur sans temporisateur, piloté par une horloge de période déterminée, agencé pour exécuter des instructions d'application, chacune d'un nombre déterminé de périodes d'horloge, sous la commande d'un logiciel d'exécution d'un nombre déterminé et maximal d'instructions et défini pour se boucler sur lui-même et se dérouler ainsi continûment au cours de périodes de logiciel, le microprocesseur comprenant des moyens de comptage des périodes de logiciel pour délivrer des signaux de base de temps.

En d'autres termes, dans le microprocesseur de l'invention, ce ne sont plus des périodes d'horloge qui sont comptées, mais des suites finies et déterminées de périodes d'horloge et même plus précisément d'instructions de durée égale à un nombre aussi déterminé de périodes d'horloge. C'est par analogie aux périodes d'horloge qu'il a été fait référence à des périodes dites de logiciel.

L'avantage procuré par l'invention est considérable, s'agissant de la transformation d'un microprocesseur sans temporisateur réel en un microprocesseur à temporisateur virtuel en fonctionnement permanent et indépendant des instructions d'application en cours d'exécution.

Avantageusement, la durée totale de toutes les instructions de séries d'instructions de plusieurs applications à exécuter à la suite d'interruptions mutuelles est au plus égale à ladite période de logiciel et, en cas d'interruption de l'exécution des instructions d'une première série d'instructions par les instructions d'une deuxième série d'instructions, les instructions de la deuxième série sont substituées à celles de la première série, jusqu'à la fin de l'exécution de celles-là et la reprise de l'exécution de celles-ci, sans pour autant suspendre le déroulement des instructions de la première série mais alors non exécutées.

L'invention sera mieux comprise à l'aide de la description suivante du mode de réalisation préféré du microprocesseur sans temporisateur de l'invention, en référence au dessin annexé, sur lequel :
- la figure 1 est un schéma par blocs représentant le microprocesseur de l'invention ;
- la figure 2 illustre le cheminement dans lequel plusieurs logiciels sont exécutés avec des branchements entre eux, et
- la figure 3 est l'organigramme d'un logiciel de commande d'une montre de tableau de bord.

Il va maintenant être décrit un microprocesseur particulier, en l'occurrence un microprocesseur 1 de tableau de bord de voiture. Un tel microprocesseur est chargé, entre autres tâches, de commander un micro-moteur 40 d'avance pas-à-pas d'une montre 41 du tableau de bord. Le microprocesseur 1 comporte un registre d'instruction 2 appartenant à une unité centrale 3 du microprocesseur 1.

Une mémoire 4 du microprocesseur 1 contient un logiciel d'application 5, traitant ici la surveillance du niveau d'essence, formé d'une rangée d'instructions 6 en nombre déterminé. Les instructions 6 sont successivement transférées une à une (flèche 7) dans le registre d'instruction 2 qui les décode successivement et commande en conséquence les divers constituants de l'unité centrale 3. L'exécution d'une instruction occupe un nombre déterminé de périodes, ici une seule, d'un signal d'horloge 8 pilotant l'unité centrale 3, le microprocesseur 1 étant, dans cet exemple, du type à architecture RISC (Reduced Instruction Set Circuit), c'est-à-dire à jeu réduit d'instructions.

Le logiciel d'application 5 comporte, en fin, une instruction 11 de branchement à un logiciel de base de temps 10, formé de plusieurs instructions, qui est exécuté après la fin de l'exécution du logiciel d'application 5.

L'exécution du logiciel 10 a pour effet d'engendrer un signal de temps 12 qui est stocké, initialement sous forme du chiffre "1", dans un registre 13 de l'unité centrale 3.

L'exécution des logiciels 5 et 10, pris ensemble, est rebouclée et, chaque fois qu'un nouveau signal de temps 12 est engendré, l'unité centrale 3 stocke dans le registre 13, sous la commande du logiciel 10, un nombre représentant le total des signaux de temps 12 engendrés depuis la dernière remise à zéro du registre 13, expliquée plus loin.

Un comparateur (non représenté) de l'unité centrale 3 compare alors le total ci-dessus à un nombre prédéterminé et, en cas d'égalité, émet un signal de base de temps 14 sortant par un port 15 du microprocesseur 1, tandis que le registre 13 est remis à zéro. On comprendra que d'autres signaux, identifiables, de base de temps peuvent être engendrés de même, à plus basse fréquence que le signal 14, afin, par exemple, de fournir, chaque heure, des signaux, si le signal 14 est produit chaque minute.

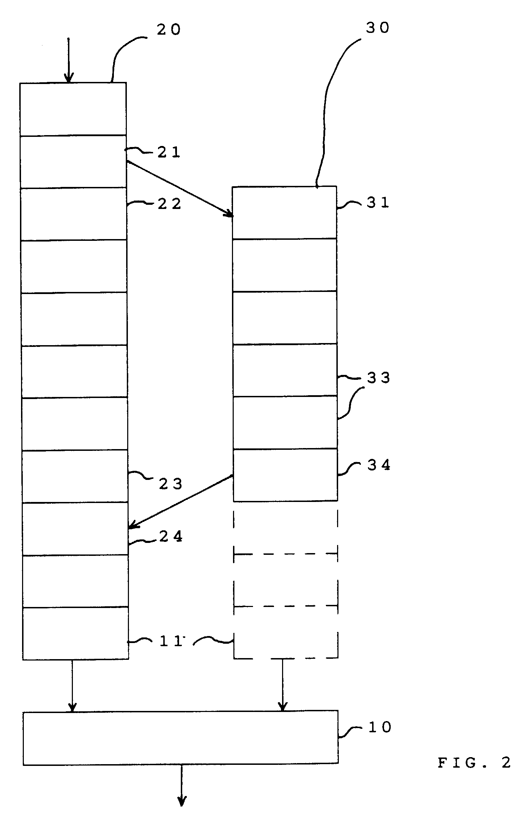

Le diagramme de cheminement de la figure 2 illustre le cas où deux logiciels d'application, 20 et 30, sont exécutés de façon imbriquée. Le logiciel 20, concernant par exemple la surveillance du niveau d'huile de la voiture, comporte une instruction 21 de branchement conditionnel vers la première instruction 31 du logiciel 30, dérivé, tandis que la dernière instruction 34 du logiciel dérivé 30 est une instruction de branchement vers une instruction 24 du logiciel 20 située en aval de l'instruction 21 de branchement. Il est prévu, ici, juste avant l'instruction 34, des instructions 33 du type "NOP" (No Opération), c'est-à-dire sans effet, dont le rôle est expliqué plus loin.

Le déroulement de l'exécution des logiciels 20 et 30 est le suivant. Le logiciel 20 commence à être exécuté et, à l'instruction de branchement conditionnel 21, branchement lié à des conditions variables liées à l'application concernée, soit son exécution se poursuit comme dans le cas du logiciel 5, soit le branchement est exécuté vers l'instruction 31.

Dans ce dernier cas, le logiciel dérivé 30 est exécuté tandis que l'instruction 22 suivant, dans le logiciel 20, l'instruction 21 ne l'est pas. Comme l'instruction 24 de retour au logiciel 20 occupe un rang qui dépend du nombre des instructions (non exécutées dans ce cas) précédentes du logiciel 20, et que, ici, le logiciel dérivé 30 comporte moins d'instructions utiles que le tronçon d'instructions 22 - 23 (précédant l'instruction 24), les instructions NOP 33 servent à accroître le nombre d'instructions du logiciel dérivé 30 pour que son instruction 34 de branchement soit "en phase" avec l'instruction 23 (inexécutée) précédant, dans le logiciel 20, l'instruction 24.

Comme précédemment, l'exécution du logiciel 5 se termine puis le logiciel 10 est exécuté.

Dans le cas inverse, dans lequel le logiciel dérivé 30 comporterait plus d'instructions que le tronçon du logiciel 20 limité par les instructions 22 et 23, des instructions NOP seraient, cette fois-ci, insérées entres les instructions 22 et 23 du logiciel 20, aux endroits les mieux appropriés, afin de rétablir l'égalité voulue entre le tronçon 22-23 et le logiciel dérivé 30.

Le logiciel dérivé 30 peut, lui-aussi, comporter un branchement conditionnel en sortie et être considéré comme le logiciel 20 vis-à-vis d'un autre logiciel dérivé.

De plus, comme le montre l'extension du logiciel 30 représentée par un pointillé, il n'est pas obligatoire de revenir au logiciel 20, puisqu'il suffit que le logiciel dérivé 30 et les éventuels autres logiciels dérivés de ce dernier présentent, avec le logiciel 20, un nombre d'instructions exécutées égal au nombre total d'instructions du logiciel 20. En d'autres termes, le tronc initial du logiciel 20, se terminant à l'instruction de branchement conditionnel 21 ou à d'autres mêmes instructions, peut se ramifier, en ces divers endroits possibles, en plusieurs branches (30) elles-mêmes ramifiées, le nombre d'instructions étant, grâce à des instructions NOP, le même pour chacun des parcours, qui se poursuit par l'exécution du logiciel 10.

Lorsqu'il est prévu plusieurs logiciels d'application, comme 20, de diverses longueurs en instructions utiles, des instructions NOP en des positions appropriées permettent d'allonger ces logiciels à une longueur commune maximale dont le temps d'exécution a une valeur utilisable par le logiciel 10.

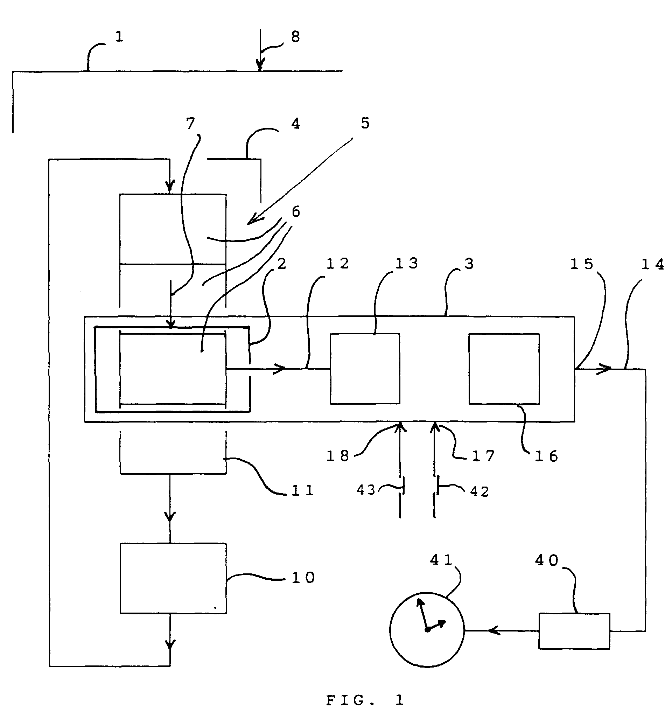

Le logiciel 10 est stocké dans une zone d'une mémoire 16 (figure 1) du microprocesseur 1, d'adresse de départ déterminée.

De plus, il lui est associé une pluralité d'instructions 11, identiques, de branchement à son adresse de départ (figure 2), chaque instruction 11 suivant la dernière instruction propre à l'application du logiciel (20, 30) concerné.

Après comptage des signaux de temps 12 et émission éventuelle du signal de base de temps 14 sur le port de sortie 15 du microprocesseur 1, le logiciel 10 libère l'unité centrale 3, après y avoir exécuté un nombre prédéterminé d'instructions. De ce point de vue, le logiciel 10, qui a une instruction de branchement conditionnel pour émettre ou non le signal de base de temps 14, a une structure semblable au logiciel 20 avec son logiciel 30.

Le logiciel 10 prend donc en compte un branchement en entrée sur lui comme étant un signal de mesure du temps écoulé depuis la fin de l'exécution précédente du logiciel 10 et il y ajoute son propre temps d'exécution, connu. Le logiciel 10 dispose ainsi d'une horloge dont la "période logicielle" est égale au nombre, normé, d'instructions d'un logiciel d'application 20 et du logiciel 10 multiplié par la durée, normée, d'une instruction.

Cette horloge à "période logicielle" est toujours disponible. En effet, après exécution du logiciel 10, l'unité centrale 3 commence l'exécution du logiciel 20 ou de tout autre logiciel demandant à être exécuté. Au cas où l'exécution cyclique d'au moins l'un des logiciels d'application (20) est malaisée, on prévoit alors un logiciel de longueur voulue, constitué d'instructions NOP, qui est "exécuté" si l'unité centrale 3 n'a pas d'autre logiciel (20, 30) à exécuter.

Pour recevoir des commandes de mise à l'heure de la montre 41 du tableau de bord, le microprocesseur est relié, en entrée 17-18, à deux touches 42 et 43 du tableau de bord, commandant respectivement l'avance des aiguilles de la montre 41 ou leur recul.

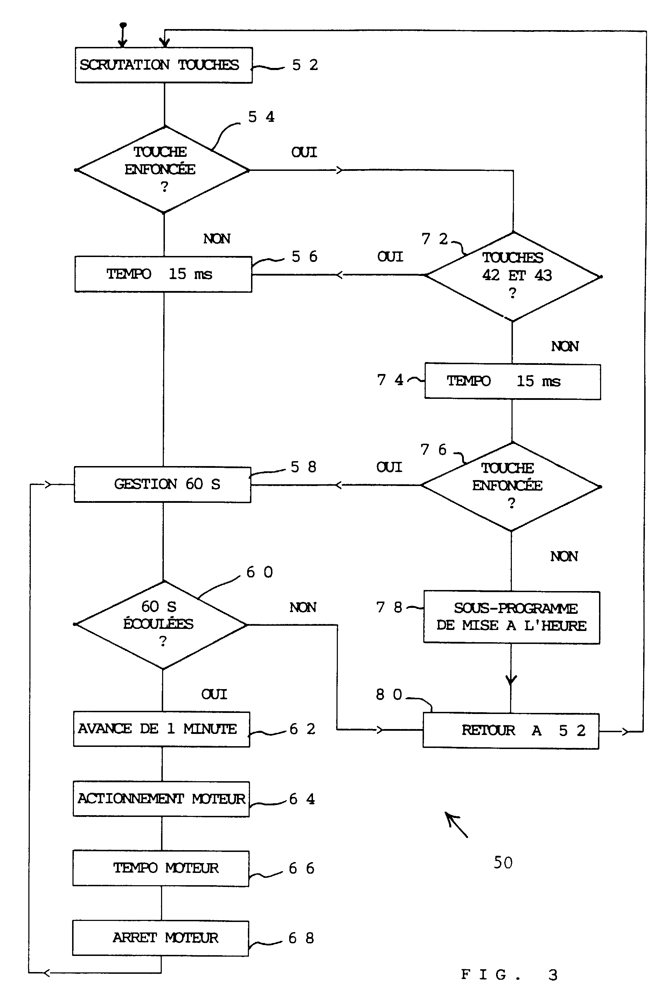

Un logiciel 50 (figure 3), appartenant au logiciel 10, commande la scrutation cyclique 52 de l'état des touches 42-43. Lorsqu'une touche 42-43 est enfoncée (54), le logiciel 50 examine (72) si les deux touches 42-43 sont simultanément enfoncées puis, quel que soit le résultat, filtre (56, 74), de façon connue, les rebonds éventuels pendant ici une quinzaine de millisecondes (ms), exactement 15,625 millisecondes, qui est un multiple des 3,81 microsecondes correspondant à la période d'horloge 8.

Si les deux touches 42-43 sont détectées comme étant enfoncées après filtrage, on revient à la boucle de base, c'est-à-dire à la "gestion 60 secondes" (58) dans laquelle le comparateur (non représenté) de l'unité centrale 3 émet un signal de base de temps 14 toutes les 60 secondes (62), qui actionne le moteur pas-à-pas 40 (64) pour faire avancer d'une minute les aiguilles de la montre 41 puis se reboucle (remise à zéro de la mémoire 13). Le signal de base de temps 14 a une durée calibrée par une temporisation (66) définie par le logiciel 50, et est constitué de deux impulsions alternées sortant sur deux fils du port 15, après quoi le moteur 40 s'arrête (68). Si une seule touche 42-43 était enfoncée (72), et après le filtrage (74) de 15,625 ms, on teste (76) si la touche 42-43 est toujours enfoncée. Si oui, on revient à la boucle de base pour la "gestion 60 secondes" (58). Sinon, on passe à un sous-programme de mise à l'heure (78) et effectue un branchement (80) sur la scrutation (52) des touches 42-43.

Dans le sous-programme 78 de mise à l'heure, lorsqu'une seule touche 42-43 est enfoncée moins d'une seconde, son relâchement entraîne l'émission d'un signal de base de temps 14 supplémentaire, qui fait avancer d'une minute les aiguilles de la montre 41, ou les fait reculer si, s'agissant de la touche 43, les deux impulsions du signal 14 ont été modifiées en conséquence.

Lorsque le sous-programme de mise à l'heure 78 détecte que l'appui de la touche 42-43 dure plus d'une seconde, il commande l'envoi d'une rafale de signaux de base de temps 14 à rythme accéléré.

## Revendications

1. Microprocesseur (1) sans temporisateur, piloté par une horloge (8) de période déterminée, agencé pour exécuter des instructions d'application (6), chacune d'un nombre déterminé de périodes d'horloge (8), sous la commande d'un logiciel d'exécution (20) d'un nombre déterminé et maximal d'instructions et défini pour se boucler sur lui-même et se dérouler ainsi continûment au cours de périodes de logiciel, le microprocesseur comprenant des moyens de comptage (3,13) des périodes de logiciel pour délivrer des signaux de base de temps (14).

2. Microprocesseur selon la revendication 1, dans lequel la durée totale de toutes les instructions de séries d'instructions de plusieurs applications (20,30) à exécuter à la suite d'interruptions mutuelles (21,34) est au plus égale à ladite période de logiciel.

3. Microprocesseur selon la revendication 2, dans lequel, en cas d'interruption de l'exécution des instructions d'une première série d'instructions (20) par les instructions d'une deuxième série d'instructions (30), les instructions de la deuxième série (30) sont substituées à celles (22-23) de la première série (20) jusqu'à la fin de l'exécution de celles-là (30) et la reprise (24) de l'exécution de celles-ci (20), sans pour autant suspendre le déroulement des instructions de la première série (20) mais alors non exécutées (22-23).

4. Microprocesseur selon l'une des revendications 1 et 2, dont l'architecture est du type RISC, à un seul cycle du microprocesseur par instruction (6).

5. Microprocesseur selon l'une des revendications 1 à 4, dans lequel des moyens d'entrée (3,16,17,18) sont agencés pour modifier le résultat de comptage des moyens de comptage (3,13), afin de modifier le rythme de délivrance des signaux de base de temps (14).

6. Microprocesseur selon l'une des revendications 1 à 5, dans lequel des moyens de sortie (15) sont agencés pour fournir des signaux de commande d'un micro-moteur pas-à-pas (40) entraînant les aiguilles d'un afficheur horaire (41).

## Patentansprüche

1. Mikroprozessor (1) ohne Zeitgeber, der von einem Taktgeber (8) mit vorgegebener Periode gesteuert wird und zum Ausführen von jeweils eine vorgebene Anzahl von Taktperioden (8) langen Anwendungsbefehlen (6) unter der Steuerung eines Ausführungsprogramms (20) vorgesehen ist, welches eine vorgegebene und maximale Anzahl von Befehlen aufweist und derart definiert ist, daß es eine eigene Schleife bildet und während der Perioden des Programms somit kontinuierlich abläuft, wobei der Mikroprozessor zum Liefern von Zeitbasissignalen (14) Mittel (3, 13) zum Zählen der Perioden des Programms aufweist.

2. Mikroprozessor nach Anspruch 1, wobei die gesamte Dauer von allen Befehlen der Befehlsreihen mehrerer Anwendungen (20, 30), die anschließend an gegenseitige Unterbrechungen (21, 34) auszuführen sind, höchstens gleich der Periode des Programms ist.

3. Mikroprozessor nach Anspruch 2, wobei im Falle einer Unterbrechung der Ausführung von Befehlen einer ersten Befehlsreihe (20) durch Befehle einer zweiten Befehlsreihe (30), die Befehle der zweiten Befehlsreihe (30) an die Stelle derjenigen (22 bis 23) der ersten Reihe (20) qesetzt werden, bis zum Ende der Ausführung dieser (30) und der Wiederaufnahme (24) der Ausführung jener (20), ohne deswegen das Ablaufen der Befehle der ersten Reihe (20) zu unterbrechen, welche folglich aber nicht ausgeführt sind (22 - 23).

4. Mikroprozessor nach einem der Ansprüche 1 oder 2, der eine Architektur vom RISC-Typ aufweist, mit einem einzigen Mikroprozessorzyklus pro Befehl (6).

5. Mikroprozessor nach einem der Ansprüche 1 bis 4, wobei Eingabemittel (3, 16, 17, 18) zum Verändern des Zählergebnisses der Zählmittel (3, 13) vorgesehen sind, um den Takt der Ausgabe der Zeitbasissignale (14) zu verändern.

6. Mikroprozessor nach einem der Ansprüche 1 bis 5, wobei Ausgabemittel (15) vorgesehen sind, um Steuersignale für einen Schritt-Mikromotor (40) zu liefern, welcher die Zeiger einer Zeitanzeige (41) antreibt.

## Claims

1. Microprocessor (1) without timer, controlled by a clock (8) of predetermined period, arranged to execute application instructions (6), each of a predetermined number of clock periods (8), under the control of software (20) for executing a predetermined and maximum number of instructions and defined in order to loop back on itself and thus to be implemented continuously during software periods, the microprocessor comprising means (3, 13) for counting software periods in order to provide time base signals (14).

2. Microprocessor according to Claim 1, in which the total duration of all the instructions of series of instructions of several applications (20, 30) to be executed following mutual interruptions (21, 34) is at the most equal to said software period.

3. Microprocessor according to Claim 2, in which, in the case of an interruption in the execution of the instructions of a first series of instructions (20) by the instructions of a second series of instructions (30), the instructions of the second series (30) are substituted for those (22-23) of the first series (20) until the end of the execution of the former (30) and the resumption (24) of the execution of the latter (20), without in as much suspending the implementation of the instructions of the first series (20) but which at that time are not executed (22-23).

4. Microprocessor according to one of Claims 1 and 2, whereof the architecture is of the RISC type, with a single cycle of the microprocessor per instruction (6).

5. Microprocessor according to one of Claims 1 to 4, in which input means (3, 16, 17, 18) are arranged to modify the counting result of the counting means (3, 13), in order to modify the delivery rhythm of the time base signals (14).

6. Microprocessor according to one of Claims 1 to 5, in which output means (15) are arranged in order to supply signals for controlling a step-by-step micromotor (40) driving the hands of a clock display (41).
